# EUROPEAN PATENT APPLICATION

(11) **EP 4 411 892 A1**
(43) Date of publication of application: **07.08.2024**
(21) Application number: 22949728.4
(22) Date of filing: 05.07.2022
(51) Int. Cl.: H01M 4/58

(54) **SECONDARY BATTERY, BATTERY MODULE, BATTERY PACK, AND ELECTRIC DEVICE**

(71) Applicant: Contemporary Amperex Technology Co., Limited, Ningde, Fujian 352100 (CN)
(72) Inventor: QIN, Meng, Ningde, Fujian 352100 (CN); GUAN, Yingjie, Ningde, Fujian 352100 (CN); MA, Qingyan, Ningde, Fujian 352100 (CN); YANG, Huiling, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/103784
(87) International publication number: WO 2024/007138

(57) **Abstract**

Provided is a secondary battery including a positive electrode plate, a negative electrode plate, and an electrolyte. The positive electrode plate includes a positive current collector and a positive active material layer arranged on the positive current collector, and the positive active material layer contains a sodium ion active material. The negative electrode plate includes a negative current collector and a negative film layer arranged on at least one surface of the negative current collector, and the negative film layer contains a carbon material. The electrolyte is arranged between the positive electrode plate and the negative electrode plate, and the electrolyte contains a sodium borate.

## Description

### FIELD

The present disclosure relates to the technical field of secondary batteries, and more particularly, to a secondary battery, a battery module, a battery pack, and an electric device.

### BACKGROUND

A sodium ion battery has a working principle and a manufacturing process similar to that of a lithium ion battery, and compared with the lithium ion battery, an electrode material used in the sodium ion battery is mainly sodium salt that has advantages of low cost, rich resources, and the like compared with a lithium source and is expected to become an alternative product of the lithium ion battery. However, the sodium ion battery is poor in circulation performance, making it difficult to be applied to practice.

### SUMMARY

Based on the above problems, embodiments of the present disclosure are to provide a secondary battery, a battery module, a battery pack, and an electric device, which can inhibit growth of sodium dendrites and improve circulation performance of the secondary battery.

A first aspect of the present disclosure provides a secondary battery, including: a positive electrode plate including a positive current collector and a positive active material layer arranged on the positive current collector, in which the positive active material layer contains a sodium ion active material; a negative electrode plate including a negative current collector and a negative film layer arranged on at least one surface of the negative current collector, the negative film layer contains a carbon material; and an electrolyte arranged between the positive electrode plate and the negative electrode plate, the electrolyte containing a sodium borate.

In the technical solution of the embodiment of the present disclosure, the positive active material layer of the positive electrode plate contains the sodium ion active material, the negative electrode plate has the negative film layer containing the carbon material, and the electrolyte contains the sodium borate. In addition, the negative film layer containing the carbon material can provide a sodium metal deposition site, and the sodium borate in the electrolyte can form an SEI film on the surface of the negative electrode plate. Further, the negative electrode plate and the electrolyte cooperate with each other to induce the sodium to be uniformly deposited, thereby inhibiting growth of sodium dendrites, which in turn greatly improves the circulation performance of the secondary battery.

In some embodiments, the carbon material includes at least one of carbon nanotubes, graphene, hard carbon, and carbon black.

In some embodiments, a thickness of the negative film layer ranges from 0.5 µm to 15 µm, and optionally, the thickness of the negative film layer ranges from 1 µm to 8 µm, and optionally, the thickness of the negative film layer ranges from 4 µm to 7 µm.

The thickness of the negative film layer is controlled within the range described above, there are more sodium metal nucleation sites on the surface of the negative electrode plate, and a nucleation overpotential of the sodium on the negative electrode plate is relatively small, which facilitates inhibiting the growth of the sodium dendrites.

In some embodiments, a surface density of the negative film layer ranges from 0.6 g/m² to 13 g/m², and optionally, the surface density of the negative film layer ranges from 1 g/m² to 8 g/m2.

The surface density of the negative film layer is controlled within the range described above, there are more sodium metal nucleation sites on the surface of the negative electrode plate, the nucleation overpotential of the sodium on the negative electrode plate is relatively small, which facilitates inhibiting the growth of the sodium dendrites.

In some embodiments, a mass percentage of the carbon material in the negative film layer ranges from 60% to 98%, and optionally, the mass percentage of the carbon material in the negative film layer ranges from 66% to 75%.

In some embodiments, the negative film layer further contains a polymer binder, and optionally, the polymer binder includes at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, butadiene styrene rubber, acrylate-butadiene rubber, polypyrrole, polyaniline, epoxy resin, and guar gum.

In some embodiments, a mass percentage of the polymer binder in the negative film layer ranges from 2% to 40%, and optionally, the mass percentage of the polymer binder in the negative film layer ranges from 25% to 34%.

In some embodiments, the sodium borate includes at least one of sodium difluoroborate, sodium tetrafluoroborate, sodium dioxalate borate, sodium difluorooxalate borate, sodium tetraphenylborate, sodium tetracyanoborate, sodium tetra(trifluoromethyl)borate, sodium bis(trifluoromethyl)difluoroborate, sodium pentafluoroethyl trifluoroborate, sodium dicyanooxalate borate, sodium methoxytricyanoborateborate, sodium ethoxytricyanoborate, sodium tetramethoxyborate, sodium tetraethoxyborate, and sodium cyanotris(2,2,2-trifluoroethyl)borate, and optionally, the sodium borate includes at least one of sodium difluorooxalate borate and sodium dioxalate borate.

Boric acid anions of the sodium borate and the negative film layer of the negative electrode plate cooperate with each other to allow a solid electrolyte interface (SEI) film to be formed on the surface of the negative electrode plate, which can repair crack formed during the deposition and stripping. Thus, sodium deposition kinetics is improved, and uniform deposition of sodium is facilitated.

In some embodiments, the electrolyte is an electrolyte solution, and optionally, a solvent in the electrolyte includes an ether solvent.

In some embodiments, the ether solvent includes at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether, and optionally, the ether solvent includes ethylene glycol dimethyl ether.

Ether solvent molecules can construct a stable electrode-electrolyte interface on the surface of the negative electrode plate to form a stable solid electrolyte interface (SEI) film, thereby reducing electrochemical polarization.

In some embodiments, in the electrolyte, a molar concentration of the sodium borate is 0.05 mol/L -8 mol/L, and optionally, the molar concentration of the sodium borate ranges from 0.1 mol/L to 2 mol/L.

Generally, the molar concentration of the sodium salt in the electrolyte ranges from 0.5 mol/L to 8 mol/L, and the sodium borate can be used as main salt or an additive in the electrolyte.

In some embodiments, the electrolyte further includes at least one of sodium perchlorate, sodium hexafluorophosphate, sodium hexafluoroarsenate, sodium trifluoroacetate, sodium trifluoromethanesulfonate, sodium bis(fluorosulfonyl)imide, and sodium bis(trifluoromethanesulfonyl)imide.

In some embodiments, an overpotential of the secondary battery is smaller than or equal to 30 mV. When the overpotential of the secondary battery is smaller than or equal to 30 mV, the sodium metal deposition uniformity is better, the growth of the lithium dendrites can be effectively inhibited, thereby improving the circulation performance of the secondary battery.

In a second aspect, embodiments of the present disclosure are further to provide a battery module including the secondary battery described above.

In a third aspect, embodiments of the present disclosure are further to provide a battery pack, including the battery module described above.

In a fourth aspect, embodiments of the present disclosure are further to provide an electric device. The electric device includes at least one of the secondary battery described above, the battery module described above, and the battery pack described above. The secondary battery is configured to supply electrical energy.

Details of one or more embodiments of the present disclosure are set forth in the following drawings and description, and other features, objects, and advantages of the present disclosure will become apparent from the description, drawings, and claims.

### BRIEF DESCRIPTION OF THE DRAWINGS

FIG. 1 is a schematic view of a secondary battery according to an embodiment of the present disclosure.
FIG. 2 is an exploded view of a secondary battery according to an embodiment of the present disclosure shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of a battery pack according to an embodiment of the present disclosure shown in FIG. 4.
FIG. 6 is a schematic view of an electric device using a secondary battery as a power supply according to an embodiment of the present disclosure.

### Description of reference signs of the drawings:

1 battery pack; 2 upper case body; 3 lower box body; 4 battery module; 5 secondary battery; 51 housing; 52 electrode assembly; 53 cover plate; 6 electric device.

In order to better describe and illustrate those embodiments and/or examples disclosed herein, reference may be made to one or more of the accompanying drawings. Additional details or examples for describing the drawings should not be considered limiting of the scope of any of the disclosed inventions, presently described embodiments and/or examples, and the best modes of these presently understood inventions.

### DESCRIPTION OF EMBODIMENTS

In order to facilitate understanding of the present disclosure, the present disclosure is described more fully below with reference to the related drawings. Preferred embodiments of the present disclosure are given in the drawings. However, the present disclosure may be implemented in many different forms and is not limited to the embodiments described herein. Conversely, a purpose of providing these embodiments is to make understanding of the disclosed content of the present disclosure more thorough and comprehensive.

Unless otherwise defined, all technical and scientific terms used herein have the same meaning as commonly understood by one skilled in the technical field of the present disclosure. The terminology used herein in the specification of the present disclosure is for the purpose of describing specific embodiments only and is not intended to limit the present disclosure. As used herein, the term "and/or" includes any and all combinations of one or more of the associated listed items.

Embodiments of the present disclosure are to provide a secondary battery, a battery module using the secondary battery, a battery pack, and an electric device. The secondary battery is suitable for various electric devices using batteries, such as a mobile phone, a portable equipment, a notebook computer, a battery car, an electric toy, an electric tool, an electric vehicle, a ship, a spacecraft, and the like. For example, the spacecraft includes an airplane, a rocket, a space shuttle, a spacecraft, and the like.

A secondary battery, a battery module, a battery pack, and an electric device of the present disclosure will be described below with reference to the accompanying drawings.

In an embodiment of the present disclosure, a secondary battery is provided. The secondary battery includes a positive electrode plate, a negative electrode plate, and an electrolyte. During charging and discharging of the battery, active ions are embedded and come off back and forth between the positive electrode plate and the negative electrode plate. The electrolyte can conduct the ions between the positive electrode plate and the negative electrode plate.

The negative electrode plate includes a negative current collector and a negative film layer arranged on at least one surface of the negative current collector. The negative film layer contains a carbon material. The electrolyte is arranged between the positive electrode plate and the negative electrode plate, and the electrolyte contains a sodium borate.

Generally, active sodium ions on the positive electrode plate are embedded and come off back and forth between the positive electrode plate and the negative electrode plate. During the charging of the secondary battery, an electrochemical reaction where the sodium ions obtain electrons to be reduced to sodium metal occurs on the negative electrode. The sodium metal is directly used as a negative electrode active substance, and thus has a relatively high energy density. However, sodium metal deposition on the surface of the negative electrode plate is not uniform, making it easy to generate sodium dendrites, thereby affecting circulation performance of the secondary battery.

In the technical solution of the embodiment of the present disclosure, the positive active material layer of the positive electrode plate contains the sodium ion active material, the negative electrode plate has the negative film layer containing the carbon material, and the electrolyte contains a sodium borate. The negative film layer containing the carbon material can provide a sodium metal deposition site, and the sodium borate in the electrolyte can form an SEI film on the surface of the negative electrode plate. Further, the negative electrode plate and the electrolyte cooperate with each other to induce the sodium to be uniformly deposited, thereby inhibiting the growth of the sodium dendrites, which in turn greatly improves the circulation performance of the secondary battery.

As an example, the negative current collector has two surfaces opposite to each other in its own thickness direction, and the negative electrode film layer is arrange on one or both of the two opposite surfaces of the negative current collector.

In some embodiments, the negative current collector may be made of a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on the polymer material base-material (base-material such as polypropylene (PP), polyethylene terephthalate (PET), polybutylene terephthalate (PBT), polystyrene (PS), polyethylene (PE), etc.).

In some embodiments, the carbon material includes at least one of carbon nanotubes, graphene, hard carbon, and carbon black.

In some embodiments, a thickness of the negative film layer ranges from 0.5 µm to 15 µm. Optionally, the thickness of the negative film layer is 0.5 µm, 1 µm, 2 µm, 3 µm, 4 µm, 5 µm, 6 µm, 8 µm, 10 µm, 12 µm, or 15 µm. Further, the thickness of the negative film layer ranges from 1 µm to 8 µm or from 4 µm to 7 µm. When the thickness of the negative film layer is controlled within the range described above, there are more sodium metal nucleation sites on the surface of the negative electrode plate, and a nucleation overpotential of the sodium on the negative electrode plate is relatively small, which facilitates inhibiting the growth of the sodium dendrites. The negative film layer with too large thickness will reduce the energy density of the secondary battery, and the negative film layer with too small thickness will result in relatively few sodium nucleation sites on the surface of the negative electrode plate, and thus the effect of inhibiting the growth of the sodium dendrites is poor.

In some embodiments, a surface density of the negative film layer ranges from 0.6 g/m² to 13 g/m². Optionally, the surface density of the negative film layer is 0.6 g/m², 1 g/m², 2 g/m², 4 g/m², 5 g/m², 6 g/m², 8 g/m², 10 g/m², 12 g/m², or 13 g/m². Further, the surface density of the negative film layer ranges from 1 g/m² to 8 g/m². When the surface density of the negative film layer is controlled within the range described above, there are more sodium metal nucleation sites on the surface of the negative electrode plate, the nucleation overpotential of the sodium on the negative electrode plate is relatively small, which facilitates inhibiting the growth of the sodium dendrites.

In some embodiments, a mass percentage of the carbon material in the negative film layer ranges from 60% to 98%. Optionally, the mass percentage of the carbon material in the negative film layer is 60%, 65%, 70%, 75%, 80%, 85%, 90%, 95% or 98%. Further, the mass percentage of the carbon material in the negative film layer ranges from 66% to 75%.

In some embodiments, the negative film layer further contains a polymer binder. In some embodiments, the polymer binder includes at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, butadiene styrene rubber, acrylate-butadiene rubber, polypyrrole, polyaniline, epoxy resin, and guar gum.

In some embodiments, a mass percentage of the polymer binder in the negative film layer ranges from 2% to 40%. Optionally, the mass percentage of the polymer binder in the negative film layer is 2%, 5%, 10%, 15%, 20%, 25%, 30%, 35%, or 40%. Further, the mass percentage of the polymer binder in the negative film layer ranges from 25% to 34%.

In some implementations, after first charged, the negative electrode plate further includes a metal sodium layer. The metal sodium layer is deposited on the surface of the negative film layer.

### Positive electrode plate

The positive electrode plate includes a positive current collector and a positive active material layer arranged on at least one surface of the positive current collector. The positive active material layer includes a positive active material.

As an example, the positive current collector has two surfaces opposite to each other in a thickness direction thereof, and the positive active material layer is arranged on one or both of the two opposite surfaces of the positive current collector.

In some embodiments, the positive current collector may be a metal foil or a composite current collector. For example, as the metal foil, an aluminum foil can be adopted. The composite current collector may include a polymer material base layer and a metal layer formed on at least one surface of the polymer material base layer. The composite current collector can be formed by forming a metal material such as aluminum, aluminum alloy, nickel, nickel alloy, titanium, titanium alloy, silver, and silver alloy on a polymer material substrate. The polymer material base material includes a substrate such as polypropylene (PP), polyethylene terephthalate (PET), polybutylene terephthalate (PBT), polystyrene (PS), polyethylene (PE), and the like.

In some embodiments, the positive active material may employ a positive active material for the battery known in the art. As an example, the sodium ion active material may include at least one of sodium transition metal oxide, polyanionic compound, and Prussian blue compound. However, the present disclosure is not limited to these materials, and other traditional well-known materials that can be used as the positive active material of the sodium ion batteries may also be used.

As an optional technical solution in the present disclosure, in the sodium transition metal oxide, the transition metal may be at least one metal selected from Mn, Fe, Ni, Co, Cr, Cu, Ti, Zn, V, Zr, and Ce. The sodium transition metal oxide is, for example, Na_{X}MO₂, where M is one or more of Ti, V, Mn, Co, Ni, Fe, Cr, and Cu, where 0<x≤1.

As an optional technical solution of the present disclosure, the polyanionic compound may be a type of compound having sodium ions, transition metal ions, and tetrahedral (YO₄)ⁿ⁻anion units. The transition metal may be at least one metal selected from Mn, Fe, Ni, Co, Cr, Cu, Ti, Zn, V, Zr, and Ce; Y can be at least one of P, S, and Si; and n represents a valence state of (YO₄)ⁿ⁻.

The polyanionic compound may also be a type of compound having sodium ions, transition metal ions, tetrahedral (YO₄)ⁿ⁻anion units, and halogen anions. The transition metal may be at least one metal selected from Mn, Fe, Ni, Co, Cr, Cu, Ti, Zn, V, Zr, and Ce; Y can be at least one of P, S, and Si, n represents the valence state of (YO₄)ⁿ⁻; and halogen may be at least one of F, Cl, and Br.

The polyanionic compound may also be a type of compound having sodium ions, tetrahedral (YO₄)ⁿ⁻anion units, polyhedral units (ZO_{y})^{m+}, and optional halogen anions. Y may be at least one of P, S, and Si, and n represents the valence state of (YO₄)ⁿ⁻; Z represents the transition metal, which may be at least one metal selected from Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound is at least one of NaFePO₄, Na₃V₂(PO4)₃ (sodium vanadium phosphate, NVP for short), Na₄Fe₃(PO₄)₂(P₂O₇), NaM'PO4F (M' is one or more of V, Fe, Mn, and Ni), and Na₃(VO_{y})₂(PO₄)₂F_{3-2y}(0≤y≤1).

The Prussian blue compound can be a type of compound having sodium ions, transition metal ions, and cyanide ions (CN⁻). The transition metal may be at least one metal selected from Mn, Fe, Ni, Co, Cr, Cu, Ti, Zn, V, Zr, and Ce. The Prussian blue compound is, for example, NaₐMe_{b}Me'_{c}(CN)₆, where Me, and Me' are each independently at least one of Ni, Cu, Fe, Mn, Co, and Zn, where 0<a≤2, 0<b<1, 0<c<1.

In some embodiments, the positive active material layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive active material layer also optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared through dispersing components for preparing the positive electrode plate, such as the positive active material, the conductive agent, the binder, and any other components in a solvent (such as N-methyl pyrrolidone) to form positive electrode slurry; and applying the positive electrode slurry on the positive current collector, and obtaining the positive electrode plate through drying, cold pressing, and the like.

### Electrolyte

The electrolyte can conduct ions between the positive electrode plate and the negative electrode plate. The electrolyte disclosed by the present disclosure includes sodium borate. The type of the electrolyte is not specifically limited, and the electrolyte may be selected as desired. For example, the electrolyte may be in a liquid state, a gel state, or an all-solid state.

In some embodiments, the sodium borate includes at least one of sodium difluoroborate, sodium tetrafluoroborate (NaBF₄), sodium dioxalate borate, sodium difluorooxalate borate, sodium tetraphenylborate (NaB(C₆H₅)₄), sodium tetracyanoborate, sodium tetra (trifluoromethyl) borate, sodium bis(trifluoromethyl)difluoroborate, sodium pentafluoroethyl trifluoroborate, sodium dicyanooxalate borate, sodium methoxytricyanoborateborate, sodium thoxytricyanoborate, sodium tetramethoxyborate, sodium tetraethoxyborate, and sodium cyanotris(2,2,2-trifluoroethyl) borate.

Further, the sodium borate includes at least one of sodium difluorooxalate borate and sodium dioxalate borate.

Boric acid anions of the sodium borate and the negative film layer of the negative electrode plate cooperate with each other to form a solid electrolyte interface (SEI) film on the surface of the negative electrode plate, thereby repairing cracks formed in deposition and stripping processes of sodium, and thus sodium deposition kinetics is improved, and uniform deposition of sodium is facilitated. The fluorine-containing sodium borate may also form a NaF-containing SEI film on the surface of the negative electrode pole piece, and the deposition kinetics is improved.

In some embodiments, the electrolyte is an electrolyte solution. Further, the solvent in the electrolyte includes an ether solvent. Ether solvent molecules can construct a stable electrode-electrolyte interface on the surface of the negative electrode plate, to form a stable solid electrolyte interface (SEI) film and reduce electrochemical polarization.

In some embodiments, the ether solvent includes at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether. Further, the ether solvent includes ethylene glycol dimethyl ether.

In some embodiments, in the electrolyte, a molar concentration of the borate sodium salt ranges from 0.05 mol/L to 8 mol/L. Optionally, the molar concentration of the borate sodium salt is 0.05 mol/L, 0.1 mol/L, 0.5 mol/L, 1 mol/L, 2 mol/L, 4 mol/L, 5 mol/L, 6 mol/L, or 8 mol/L. Further, the molar concentration of the sodium borate ranges from 0.1 mol/L to 2 mol/L.

Generally, the molar concentration of the sodium salt in the electrolyte ranges from 0.5 mol/L to 8 mol/L, and in the present disclosure, the sodium borate can be used as main salt or an additive in the electrolyte.

In some embodiments, the electrolyte further includes at least one of sodium perchlorate (NaClO₄), sodium hexafluorophosphate (NaPF₆), sodium hexafluoroarsenate (NaAsF₆), sodium trifluoroacetate (CF₃COONa), sodium trifluoromethanesulfonate (NaSOsCFs), sodium bis(fluorosulfonyl)imide (Na[(FSO₂)₂N]), and sodium bis(trifluoromethanesulfonyl)imide (Na[(CF₃SO₂)₂N]).

In some embodiments, the solvent in the electrolyte further includes at least one of ethylene carbonate, propylene carbonate, butylene carbonate, vinylene carbonate, fluoroethylene carbonate, methyl ethyl carbonate, dimethyl carbonate, diethyl carbonate, dipropyl carbonate, methyl propyl carbonate, ethyl propyl carbonate, gamma-butyrolactone, 1,3-propane sultone, methyl propionate, methyl butyrate, ethyl acetate, ethyl propionate, propyl propionate, ethyl butyrate, and dimethyl sulfoxide.

In some embodiments, the electrolyte further optionally includes an additive. For example, the additive may include a negative electrode film-forming additive and a positive electrode film-forming additive, and it may further include additives capable of improving certain performances of the battery, such as additives for improving an overcharge performance of the battery, additives for improving a high-temperature or low-temperature performance of the battery, and the like.

### Separator

In some embodiments, the secondary battery further includes a separator. A type of the separator is not particularly limited in the present disclosure, and any well-known porous structure separator with good chemical stability and mechanical stability may be selected.

In some embodiments, a material of the separator may be selected from at least one of glass fiber, non-woven fabric, polyethylene, polypropylene, and polyvinylidene fluoride. The separator may be a single-layer thin film or may be a multi-layer composite thin film, which is not particularly limited. When the separator is the multi-layer composite thin film, materials of the layers may be the same or different, which is not particularly limited in this regard.

In some embodiments, the overpotential of the secondary battery is smaller than or equal to 30 mV. When the overpotential of the secondary battery is smaller than or equal to 30 mV, the sodium metal deposition uniformity is better, the growth of the lithium dendrites can be effectively inhibited, and the circulation performance of the secondary battery is improved.

In some embodiments, the positive electrode plate, the negative electrode plate, and the separator may be made into an electrode assembly through a winding process or a lamination process.

In some embodiments, the secondary battery may include an outer package. The outer package may be configured to encapsulate the electrode assembly and the electrolyte above.

In some embodiments, the outer package of the secondary battery may be a hard case, such as a hard plastic case, an aluminum case, a steel case, and the like. The outer package of the secondary battery may also be a soft package, such as a bag-type soft package. A material of the soft package may be plastic, and as for the plastic, polypropylene, polybutylene terephthalate, polybutylene succinate, and the like may be listed.

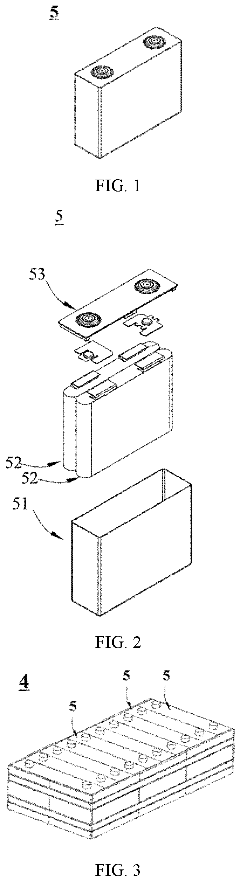

A shape of the secondary battery is not particularly limited in the present disclosure, and it may be cylindrical, square, or any other shape. For example, FIG. 1 is a secondary battery 5 of a square structure as an example.

In some embodiments, referring to FIG. 2, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 is arranged to cover the opening in order to close the accommodating cavity. The positive electrode plate, the negative electrode plate, and the separator may be formed as an electrode assembly 52 through a winding process or a lamination process. The electrode assembly 52 is encapsulated in the accommodating cavity. The electrolyte is infiltrated in the electrode assembly 52. The secondary battery 5 may include one or more electrode assemblies 52, and those skilled in the art may make a selection as descried.

In some embodiments, the secondary battery may be assembled into a battery module, and the battery module may include one or more secondary batteries, and specific number of of the secondary batteries may be selected by those skilled in the art based on an application and a capacity of the battery module.

FIG. 3 is an exemplary battery module 4. Referring to FIG. 3, in the battery module, a plurality of the secondary batteries 5 may be sequentially arranged along a length direction of the battery module 4. Certainly, they may also be arranged in any other manner. The plurality of the secondary batteries 5 may be further fixed by fasteners.

Optionally, the battery module 4 may further include an outing shell having an accommodation space, and the plurality of the secondary batteries 5 are accommodated in the accommodation space.

In some embodiments, the battery module as described above may also be assembled into a battery pack, and the battery pack may include one or more battery modules, and the specific number of the battery modules may be selected by those skilled in the art according to an application and a capacity of the battery pack.

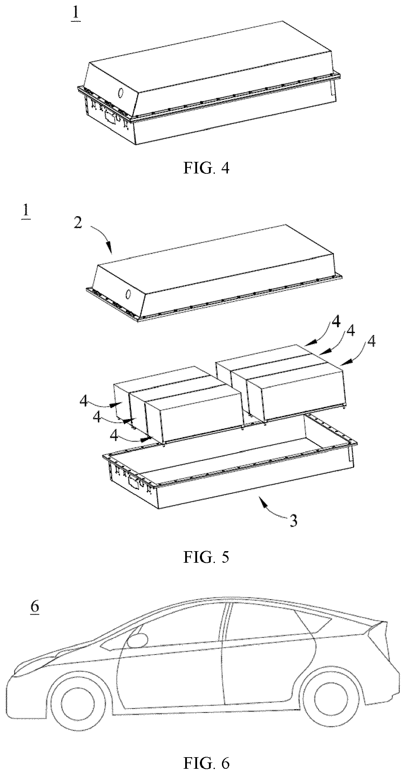

FIG. 4 and FIG. 5 shows an exemplary battery pack 1. Referring to FIG. 4 and FIG. 5, the battery pack 1 may include a battery box and a plurality of the battery modules 4 arranged in the battery box. The battery box includes an upper box body 2 and a lower box body 3, and the upper box body 2 is arranged to cover the lower box body 3 and form a closed space for accommodating the battery module 4. The plurality of the battery modules 4 may be arranged in the battery box in any manner.

In addition, the present disclosure further provides an electric device. The electric device includes at least one of the secondary battery, the battery module, and the battery pack according to the embodiments of the present disclosure. The secondary battery, the battery module, or the battery pack may be used as a power supply for the electric device, and may also be used as an energy storage unit of the electric device. The electric device may include a mobile device, an electric vehicle, an electrical train, a ship, a satellite, an energy storage system, and the like, and the present disclosure is not limited thereto. The mobile device may be, for example, a mobile phone, a notebook computer, etc. The electric vehicle may be, for example, a pure electric vehicle, a hybrid electric vehicle, a plug-in hybrid electric vehicle, an electric bicycle, an electric scooter, an electric golf cart, an electric truck, and the like, and the present disclosure is not limited thereto.

As the electric device, the secondary battery, the battery module or the battery pack may be selected as desired.

FIG. 6 is an exemplary electric device 6. The electric device 6 is a pure electric vehicle, a hybrid electric vehicle, a plug-in hybrid electric vehicle, and the like. In order to meet requirements of the electric device for high power and high energy density of the secondary battery, a battery pack or a battery module may be employed.

Another exemplary device may be a mobile phone, a tablet computer, a notebook computer, and the like. The device is usually required to be light and thin, and the secondary battery may be used as a power supply.

### Embodiments

Embodiments of the present disclosure will be described below. The embodiment described below is exemplary and only used for explaining the present disclosure, and it cannot be understood as limitation to the present disclosure. The specific techniques or conditions which are not specified in the embodiment are carried out in accordance with the techniques or conditions described in the literature in the art or in accordance with the specification of the product. The used reagents or instruments, which are not indicated with manufacturers, are all conventional products which can be commercially available.

### Embodiment 1

Preparation of the positive electrode plate including: fully dissolving a 10 wt% polyvinylidene fluoride (PVDF) binder in N-methyl pyrrolidone (NMP); and adding 10 wt% of a carbon black conductive agent and 80 wt% of a positive active material (Na₄Fe₃(PO₄)₂(P₂O₇)) to prepare uniformly dispersed slurry. The slurry is uniformly applied on the surface of the aluminum foil and then transferred into a vacuum drying oven to be completely dried. The obtained plate is rolled and then punched to obtain the positive electrode plate.

Preparation of the negative electrode plate includes: adding 4 wt% of hard carbon and 1.6 wt% of the polymer binder of sodium carboxymethyl cellulose (CMC-Na) into water; stirring the mixture to form uniform slurry; applying the slurry on the surface of the copper foil; transferring it into a vacuum drying oven to be completely dried; and performing the punching to obtain the negative electrode plate. The thickness of the negative film layer on the negative electrode plate is 5 µm, and the surface density is 5.6 g/m².

Preparation of the electrolyte includes: in an argon atmosphere glove box (H₂O<0.1ppm, O₂<0.1ppm), dissolving sodium difluoro (oxalato) borate (NaDFOB) in organic solvent of ethylene glycol dimethyl ether, and uniformly stirring, to obtain the electrolyte of NaDFOB with the concentration of 1.5 mol/L.

### A polypropylene film may be used as the separator.

Preparation of the secondary battery includes: laminating the positive electrode plate, the separator, and the negative electrode plate sequentially to locate the separator between the positive current collector and the negative current collector to provide isolation; and injecting the electrolyte to assemble the secondary battery.

### Embodiments 2 to 5

Embodiments 2 to 5 differ from the Embodiment 1 in that the hard carbon in the negative electrode plate in the first embodiment is replaced with other carbon materials. The carbon materials used in the negative electrode plate in the embodiments 2 to 5 are recorded in Table 1.

### Embodiments 6 to 9

Embodiments 6 to 9 differ from the Embodiment 1 in that the thickness and the surface density of the negative film layer are different. The thickness and the surface density of the negative film layer of the negative electrode plate in the Embodiments 6 to 9 are recorded in Table 1.

### Embodiments 10 and 11

Embodiments 10 and 11 differ from the first embodiment in that the mass percentage of the hard carbon in the negative film layer is different. The mass percentage of the hard carbon in the negative film layer in the embodiments 10 and 11 is recorded in Table 1, and a ratio of the hard carbon and the polymer binder can be adjusted based on the mass ratio in Table 1 during the preparation of the negative electrode plate.

### Embodiments 12 to 18

Embodiments 12 to 18 differ from the first embodiment in that compositions of the electrolyte are different. The compositions of the electrolyte in the Embodiments 12 to 18 are recorded in Table 1.

### Comparative Example 1

A difference between the Comparative Example 1 and the Embodiment 1 is in that the negative electrode plate is a copper current collector without the negative film layer.

### Comparative Example 2

A difference between the Comparative Example 2 and the Comparative Example 1 is in that NaDFOB in the electrolyte is replaced with NaPF₆.

### Comparative Example

A difference between the Comparative Example 3 and the Embodiment 1 is in that NaDFOB in the electrolyte is replaced with NaPF₆.

The compositions of the secondary batteries in the Embodiments 1 to 18 and the Comparative Examples 1 to 3 are all recorded in Table 1.

**Table 1 Compositions of Secondary Batteries of Embodiment 1 to 18 and Comparative Examples 1 to 3**

| Number | Electrolyte | | Negative film layer | | |
|---|---|---|---|---|---|
| | Type and concentration of sodium salt | Solvent | Type and mass percentage of carbon material | Thickness (nm) | Surface density (g/mm²) |
| Embodiment 1 | 1.5M NaDFOB | ethylene glycol dimethyl ether | hard carbon, 71% | 5 µm | 5.6 |
| Embodiment 2 | 1.5M NaDFOB | ethylene glycol dimethyl ether | carbon black, 71% | 5 µm | 5.5 |
| Embodiment 3 | 1.5M NaDFOB | ethylene glycol dimethyl ether | multi walled carbon nanotubes, 71% | 5 µm | 5.3 |
| Embodiment 4 | 1.5M NaDFOB | ethylene glycol dimethyl ether | single walled carbon nanotubes, 71% | 5 µm | 5.2 |
| Embodiment 5 | 1.5M NaDFOB | ethylene glycol dimethyl ether | graphene,71% | 5 µm | 4.9 |
| Embodiment 6 | 1.5M NaDFOB | ethylene glycol dimethyl ether | hard carbon, 71% | 1 µm | 1.8 |
| Embodiment 7 | 1.5M NaDFOB | ethylene glycol dimethyl ether | hard carbon, 71% | 8 µm | 7.2 |
| Embodiment 8 | 1.5M NaDFOB | ethylene glycol dimethyl ether | hard carbon, 71% | 0.5 µm | 1.2 |
| Embodiment 9 | 1.5M NaDFOB | ethylene glycol dimethyl ether | hard carbon, 71% | 15 µm | 11.6 |
| Embodiment 10 | 1.5M NaDFOB | ethylene glycol dimethyl ether | hard carbon, 60% | 5 µm | 5.2 |
| Embodiment 11 | 1.5M NaDFOB | ethylene glycol dimethyl ether | hard carbon, 97.5% | 5 µm | 6.4 |
| Embodiment 12 | 0.1M NaDFOB+ 1.4M NaPF₆ | ethylene glycol dimethyl ether | hard carbon, 71% | 5 µm | 5.6 |
| Embodiment 13 | 2M NaDFOB | ethylene glycol dimethyl ether | hard carbon, 71% | 5 µm | 5.6 |
| Embodiment 14 | 0.05M NaDFOB+ 1.45M NaPF₆ | ethylene glycol dimethyl ether | hard carbon, 71% | 5 µm | 5.6 |
| Embodiment 15 | 8M NaDFOB | ethylene glycol dimethyl ether | hard carbon, 71% | 5 µm | 5.6 |
| Embodiment 16 | 1.5M Sodium bis(oxalato)borate | ethylene glycol dimethyl ether | hard carbon, 71% | 5 µm | 5.6 |
| Embodiment 17 | 0.05M NaDFOB+ 0.05 M LiPF₆+ 1.4M NaPF₆ | ethylene glycol dimethyl ether | hard carbon, 71% | 5 µm | 5.6 |
| Embodiment 18 | 1.45M NaDFOB+ 0.05M LiPF₆ | ethylene glycol dimethyl ether | hard carbon, 71% | 5 µm | 5.6 |
| Comparative Example 1 | 1.5M NaDFOB | ethylene glycol dimethyl ether | / | / | / |
| Comparative Example 2 | 1.5M NaPF₆ | ethylene glycol dimethyl ether | / | / | / |
| Comparative Example 3 | 1.5M NaPF₆ | ethylene glycol dimethyl ether | hard carbon, 71% | 5 µm | 5.6 |

Test will be described below.

As for the test of overpotential, the prepared secondary battery is charged to 100 µA at a constant current of 0.1C at a temperature of 25°C, and the obtained most negative potential is recorded as the overpotential.

As for the test of coulomb efficiency, the prepared secondary battery is charged to 3.7V at a constant current of 1/3C at the temperature of 25°C, and then charged at a constant voltage of 3.7 V until the current is reduced to 0.05C, to obtain a first charging capacity (Cc1), and then discharged to 2.5V at the constant current of 1/3C to obtain a first discharging capacity (Cd1), and the coulomb efficiency of the secondary battery is calculated in accordance with a formula as below.

The coulomb efficiency of the secondary battery = the first discharging capacity (Cd1)/the first charging capacity (Cc1).

As for the test of capacity retention, the secondary battery is charged to 3.7V at a constant current of 1C at the temperature of 25°C, then charged at the constant voltage of 3.7 V until the current is reduced to 0.05C, and discharged to 2.5V at the constant current of 1C, to obtain a first-circle discharging capacity (Cd1); and repeatedly charged and discharged to n-th circle, to obtain the discharging capacity after the secondary battery circulates n circles, which is recorded as Cdn, and the capacity retention rate of the secondary battery is calculated in accordance with a formula as below.

The capacity retention rate = the discharging capacity after circulating n circles (Cdn)/the first-circle discharging capacity (Cd1).

As for the test of sodium dendrite formation, the secondary battery after circulating 100 circles in a glove box (argon atmosphere, H₂O<0.1ppm, O₂<0.1ppm) is disassembled, and it is determined whether the sodium dendrite is generated or not by observing a surface morphology of the negative electrode plate with naked eyes.

Test results of the secondary batteries in Embodiments 1 to 18 and Comparative Examples 1 to 3 are recorded in Table 2.

**Table 2 Electrochemical properties of the secondary batteries of Embodiments 1 to 18 and Comparative Examples 1 to 3**

| serial number | overpotential (mV) | coulomb efficiency (%) | capacity retention rate after circulating 100 circles (%) | sodium dendrite condition |
|---|---|---|---|---|
| Embodiment 1 | 15 | 96.0 | 88.5 | / |
| Embodiment 2 | 17 | 94.5 | 87.6 | / |
| Embodiment 3 | 18 | 93.9 | 87.1 | / |
| Embodiment 4 | 19 | 92.7 | 85.9 | / |
| Embodiment 5 | 21 | 92.1 | 85.0 | / |
| Embodiment 6 | 23 | 91.7 | 84.4 | / |
| Embodiment 7 | 15 | 94.3 | 87.1 | / |
| Embodiment 8 | 26 | 90.5 | 83.1 | / |
| Embodiment 9 | 15 | 93.7 | 86.8 | / |
| Embodiment 10 | 15 | 95.3 | 87.8 | / |
| Embodiment 11 | 15 | 95.5 | 88.1 | / |
| Embodiment 12 | 22 | 91.9 | 84.5 | / |
| Embodiment 13 | 18 | 92.9 | 86.0 | / |
| Embodiment 14 | 25 | 90.6 | 83.4 | / |
| Embodiment 15 | 20 | 88.7 | 81.6 | / |
| Embodiment 16 | 19 | 92.7 | 86.2 | / |
| Embodiment 17 | 25 | 90.8 | 83.5 | / |
| Embodiment 18 | 15 | 96.2 | 88.6 | / |
| Comparative Example 1 | 36 | 83.2 | 75.9 | serious |
| Comparative Example 2 | 40 | 81.1 | 71.7 | serious |
| Comparative Example 3 | 30 | 87.2 | 79.3 | slight |

It can be seen from related data of Table 2 that compared with the secondary battery in the Comparative Examples 1-3, the secondary battery of Embodiments 1-18 has a relatively low overpotential (15 Mv to 25 mV), which is beneficial to improving the deposition uniformity of sodium on the surface of the negative electrode. For the secondary battery in Embodiments 1-18, the coulomb efficiency ranges from 88.7% to 96.0%, the capacity retention rate after 100 cycles of circulation ranges from 81.6% to 88.5%, and there is no naked-eye visible sodium dendrite on the surface of the negative electrode plate after 100 circles of circulation. Therefore, it can be seen that the secondary battery in Embodiments 1-18 can significantly inhibit the growth of the sodium dendrites in the circulation process and has a relatively high coulomb efficiency and good circulation performance.

The Comparative Example 2 is a traditional sodium ion battery, the overpotential is 40 mV, the coulomb efficiency is 81.1%, the capacity retention rate after 100 circles of circulation is 71.7%, and the sodium dendrite condition is serious after 100 circles of circulation. On the basis of the Comparative Example 2, in the Comparative Example 1, the sodium salt is replaced by NaDFOB, the overpotential of the secondary battery is slightly reduced, the coulomb efficiency is 83.2%, the capacity retention rate after 100 cycles of circulation is 75.9%, the coulomb efficiency and the circulation performance are slightly improved with serious lithium dendrite condition. A difference between Comparative Example 3 and Embodiment 1 is in that the sodium salt of the electrolyte in Comparative Example 3 is NaPF₆, and compared with the secondary battery of Comparative Example 1, the coulomb efficiency and the circulation performance of the secondary battery in Comparative Example 3 are improved to a certain extent. However, compared with Embodiment 1, the overpotential, the coulomb efficiency, and the circulation performance of the secondary battery in Comparative Example 3 are significantly deteriorated, and slight sodium dendrites can be observed after 100 circles of circulation.

The various technical features of the embodiments described above may be combined arbitrarily. In order to make the description concise, not all possible combinations of the various technical features in the above embodiments are described. However, as long as there is no contradiction in the combinations of these technical features, all of these should be considered to be in the scope of the present specification.

The above embodiments only express several embodiments of the present disclosure, and the description thereof is relatively specific and detailed, and cannot be understood as a limitation on the scope of the present disclosure. It should be noted that for a person of ordinary skill in the art, a plurality of variations and improvements may be made without departing from the concept of the present disclosure, and these are all within the scope of the present disclosure. Therefore, the scope of the present disclosure shall be subject to the appended claims.

## Claims

1. A secondary battery, comprising:
a positive electrode plate comprising a positive current collector and a positive active material layer arranged on the positive current collector, the positive active material layer containing a sodium ion active material;
a negative electrode plate comprising a negative current collector and a negative film layer arranged on at least one surface of the negative current collector, the negative film layer containing a carbon material; and
an electrolyte arranged between the positive electrode plate and the negative electrode plate, the electrolyte containing a sodium borate.

2. The secondary battery according to claim 1, wherein the carbon material comprises at least one of carbon nanotubes, graphene, hard carbon, and carbon black.

3. The secondary battery according to claim 1 or 2, wherein a thickness of the negative film layer ranges from 0.5 µm to 15 µm,
optionally, the thickness of the negative film layer ranges from 1 µm to 8 µm, and
optionally, the thickness of the negative film layer ranges from 4 µm to 7 µm.

4. The secondary battery according to any one of claims 1 to 3, wherein a surface density of the negative film layer ranges from 0.6 g/m² to 13 g/m², and
optionally, the surface density of the negative film layer ranges from 1 g/m² to 8 g/m².

5. The secondary battery according to any one of claims 1 to 4, wherein a mass percentage of the carbon material in the negative film layer ranges from 60% to 98%, and
optionally, the mass percentage of the carbon material in the negative film layer ranges from 66% to 75%.

6. The secondary battery according to any one of claims 1 to 5, wherein the negative film layer further contains a polymer binder, and
optionally, the polymer binder comprises at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, butadiene styrene rubber, acrylate-butadiene rubber, polypyrrole, polyaniline, epoxy resin, and guar gum.

7. The secondary battery according to claim 6, wherein a mass percentage of the polymer binder in the negative film layer ranges from 2% to 40%, and
optionally, the mass percentage of the polymer binder in the negative film layer ranges from 25% to 34%.

8. The secondary battery according to any one of claims 1 to 7, wherein the sodium borate comprises at least one of sodium difluoroborate, sodium tetrafluoroborate, sodium dioxalate borate, sodium difluorooxalate borate, sodium tetraphenylborate, sodium tetracyanoborate, sodium tetra(trifluoromethyl)borate, sodium bis(trifluoromethyl)difluoroborate, sodium pentafluoroethyl trifluoroborate, sodium dicyanooxalate borate, sodium methoxytricyanoborateborate, sodium ethoxytricyanoborate, sodium tetramethoxyborate, sodium tetraethoxyborate, and sodium cyanotris(2,2,2-trifluoroethyl)borate, and
optionally, the sodium borate comprises at least one of sodium difluorooxalate borate and sodium dioxalate borate.

9. The secondary battery according to any one of claims 1 to 8, wherein the electrolyte is an electrolyte solution, and
optionally, a solvent in the electrolyte comprises an ether solvent.

10. The secondary battery according to claim 9, wherein the ether solvent comprises at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether, and
optionally, the ether solvent comprises ethylene glycol dimethyl ether.

11. The secondary battery according to claim 9 or 10, wherein a molar concentration of the sodium borate in the electrolyte ranges from 0.05 mol/L to 8 mol/L, and
optionally, the molar concentration of the sodium borate ranges from 0.1 mol/L to 2 mol/L.

12. The secondary battery according to any one of claims 1 to 11, wherein the electrolyte further comprises at least one of sodium perchlorate, sodium hexafluorophosphate, sodium hexafluoroarsenate, sodium trifluoroacetate, sodium trifluoromethanesulfonate, sodium bis(fluorosulfonyl)imide, and sodium bis(trifluoromethanesulfonyl)imide.

13. The secondary battery according to any one of claims 1 to 12, wherein an overpotential of the secondary battery is less than or equal to 30 mV.

14. A battery module, comprising the secondary battery according to any one of claims 1 to 13.

15. A battery pack, comprising the battery module according to claim 14.

16. An electric device, comprising at least one of the secondary battery according to any one of claims 1 to 13, the battery module according to claim 14, and the battery pack according to claim 15, wherein the secondary battery is configured to supply electrical energy.
